(19) **Europäisches Patentamt**
**European Patent Office**
**Office européen des brevets**

(11) Veröffentlichungsnummer: **0 270 072**
**A2**

(12) **EUROPÄISCHE PATENTANMELDUNG**

(21) Anmeldenummer: **87117746.5**

(22) Anmeldetag: **01.12.87**

(51) Int. Cl.⁴: **G05D 13/62**

(30) Priorität: **04.12.86 DE 3641407**

(43) Veröffentlichungstag der Anmeldung:
**08.06.88 Patentblatt  88/23**

(84) Benannte Vertragsstaaten:
**AT BE CH DE ES FR GB GR IT LI LU NL SE**

(71) Anmelder: **Deutsche Thomson-Brandt GmbH**
**Postfach 2060**
**D-7730 Villingen-Schwenningen(DE)**

(72) Erfinder: **Schandl, Hartmut, Dipl.-Ing.**
**Egerstrasse 2**
**D-7730 Villingen-Schwenningen(DE)**

(74) Vertreter: **Körner, Peter, Dipl.-Ing.**
**Deutsche Thomson-Brandt GmbH Patent-**
**und Lizenzabteilung Göttinger Chaussee 76**
**D-3000 Hannover 91(DE)**

(54) **Anordnung zur Drehzahlregelung.**

(57) Die Erfindung betrifft eine Anordnung zur Drehzahlregelung einer direkt angetriebenen Welle. Mit der Welle (2) ist ein elektromotorisch wirkender Tachogenerator (9) verbunden, der innerhalb eines vorgegebenen Drehzahlbereiches der Welle (2) periodisch abwechselnd als Drehzahldetektor, oder auf die Welle einwirkend, als Phasenstellglied geschaltet ist.

## Anordnung zur Drehzahlregelung

Es ist bekannt, einen Motor für den Antrieb einer Welle mit Hilfe der Auswertung von Signalen eines mit der Welle verbundenen Tachogenerators im Vergleich zu einem Referenzsignal nachzusteuern. Diese Nachsteuerung ist bei einem sogenannten Direktantrieb, bei dem die Motorwelle gleich Antriebswelle ist, optimal, da auch die Tachogeneratorwelle mit der Motorwelle eine Einheit bildet und somit zwischen beiden Teilen kein Phasenfehler auftreten kann.

Bei indirekten Antrieben mit einem zwischen Motor und Antriebswelle zwischengeschalteten Getriebe oder einem elastischen Riemen für den Antrieb der Welle, kann dagegen durch Elastizität in den Antriebszahnrädern oder durch Dehnung des elastischen Riemens ein Phasenfehler zwischen Motorwelle und Antriebswelle auftreten, so daß durch die abgegebenen Tachosignale, die proportional zur Drehzahl der Welle generiert werden, leicht die Gefahr einer Fehlsteuerung des Motors gegeben ist. Dadurch können Resonanzen angeregt werden, die im Regelsystem zu Schwingneigungen führen.

Es ist Aufgabe der Erfindung, eine Anordnung für eine Drehzahlregelung für eine Welle aufzuzeigen, durch die, speziell bei einem Riemenantrieb für die Welle, kleine Phasenschwankungen an der Welle ausgeglichen werden, ohne daß eine Drehzahlkorrektur mit dem Antriebsmotor über den elastischen Riemen erfolgt.

Diese Aufgabe wird gemäß der Erfindung durch die im Anspruch 1 aufgeführten Merkmale gelöst. Weiterbildungen der Erfindung sind in den Unteransprüchen gekennzeichnet.

Im Prinzip wird ein mit der z.B. riemengetriebenen Welle verbundener, elektromotorisch wirkender Tachogenerator innerhalb eines vorgegebenen Drehzahlbereiches periodisch abwechselnd als Drehzahldetektor, oder, auf die Welle einwirkend, als motorisch bzw. generatorisch wirkendes Phasenstellglied geschaltet. Die periodische Umschaltung zwischen der Wirkung als Phasenstellglied oder als Drehzahldetektor kann erst erfolgen, wenn ein vorgegebener Solldrehzahlbereich erreicht ist. Der Tachogenerator arbeitet während des Hochlaufvorganges und außerhalb des "Soll-Drehzahlbereichfensters" als Drehzahldetektor, so daß außerhalb dieses Fensters eine Motornachsteuerung über die Drehzahlvergleichsschaltung gegeben ist.

Die periodische Umschaltung des Tachogenerators wird durch einen Taktgenerator bewirkt, der seinerseits einen Schalter steuert, mit dem die Tachoanschlüsse umgeschaltet werden. Arbeitet der Tachogenerator als Drehzahldetektor, ist ein Tachoanschluß mit der Drehzahlvergleichsschaltung verbunden, während bei der Phasensteuerung der Tachoanschluß direkt mit der Referenzfrequenz verbunden ist. Der Tachogenerator arbeitet bei nacheilender Phase an der Welle als beschleunigender Motor und bei voreilender Phase als bremsender Generator. Das Fenster bei Solldrehzahl, d.h. der Einsatz des Taktgenerators wird z.B. von einem Ausgang der Drehzahlvergleichsschaltung abgeleitet.

Durch diese Methode einer getakteten Phasenregelung ist es unter Umgehung einer Motornachsteuerung möglich, in einem bestimmten Drehzahlbereich der indirekt angetriebenen Welle geringe Drehzahlschwankungen dieser Welle, die z.B. durch Laständerungen hervorgerufen werden, schnell und präzise auszuregeln, d.h. es wird Synchronität zwischen Referenzsignal und dem ideellen, dem Referenzsignal entsprechenden Tachosignal hergestellt.

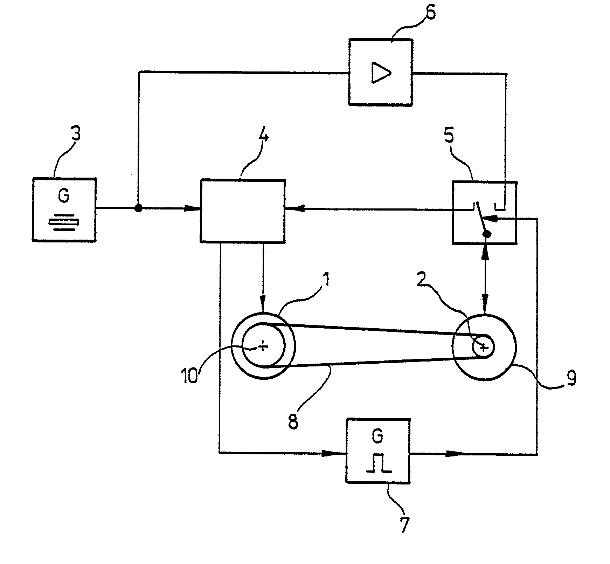

Anhand der Figur soll die Erfindung beispielhaft näher erläutert werden. Die Figur zeigt in einem Blockschaltbild, einen Motor 1, mit einer Riemenscheibe 10. Über einen elastischen Riemen 8 wird die Welle 2, die z.B. bei einem Plattenspieler den Plattenteller trägt, angetrieben. Mit der Welle 2 ist der elektromotorisch wirkende Tachogenerator 9 direkt verbunden. Die Motordrehzahl wird von einer Drehzahlvergleichsschaltung 4 gesteuert.

In dieser Schaltung wird ein Referenzsignal, welches in einem quarzgesteuerten Generator 3 erzeugt wird, mit den vom Tachogenerator 9 abgegebenen Signalen verglichen, und daraus resultierend ein Nachsteuersignal für den Motor 1 abgeleitet. Für die Motorregelung ist der Tachogenerator 9 über den elektronischen Schalter 5 in dessen Ruhestellung mit der Drehzahlvergleichsschaltung 4 verbunden. An einem zweiten Ausgang der Drehzahlvergleichsschaltung 4 ist ein Taktgenerator 7 angeschlossen. An diesem Ausgang wird bei Übereinstimmung von Referenzfrequenz und Tachofrequenz ein Signal abgegeben, durch welches der Taktgenerator 7 aktiviert wird.

Der Taktgenerator 7 steuert jetzt den elektronischen Schalter 5 periodisch mit einem vorgegebenen Takt zwischen seinen beiden Schalterstellungen, so daß der Anschluß von Tachogenerator 9 in der einen Schalterstellung, = Ruhestellung, mit der Drehzahlvergleichsschaltung 4 und in der anderen Schalterstellung mit der Referenzquelle 5 über Verstärker 6 verbunden ist. In dieser letztgenannten Schalterstellung wird der Tachogenerator direkt von der Referenzfrequenz gesteuert, d.h., er wird als antreibender Motor für die Welle bei nacheilender Phasenlage und als bremsender Generator bei voreilender Phasenlage betrieben. Es wird also Synchronität zwischen der Phasenlage des Referenzsignales und dem ideellen, dem Referenzsignal entsprechenden Tachosignal hergestellt.

Damit die Motorsteuerung aber weiterhin aufrechterhalten bleibt, kann diese Phasenregelung nur, wie beschrieben, in periodischen Abschnitten erfolgen. Bei größeren Drehzahlabweichungen, die durch die Phasenregelung nicht mehr ausgeglichen werden können, wird Taktgenerator 7 automatisch durch die Drehzahlvergleichsschaltung 4 abgeschaltet und Schalter 5 fällt in seine Ruhestellung zurück. Für diesen Betriebszustand erfolgt dann lediglich eine Motorregelung, solange, bis Tachosignal und Referenzsignal wieder etwa gleich groß sind und eine erneute Phasenregelung beginnen kann.

**Ansprüche**

1. Anordnung zur Drehzahlregelung, mit einem Motor(1), einer durch diesen indirekt angetriebenen Welle (2) für einen Antrieb, einem mit der Welle direkt verbundenen, elektromotorisch wirkenden Tachogenerator (9) und einer Drehzahlvergleichsschaltung (4), in der ein Referenzsignal mit den Signalen des Tachogenerators verglichen und ein Steuersignal zur Nachsteuerung des Motors generiert wird, dadurch gekennzeichnet, daß der Tachogenerator (9) innerhalb eines vorgegebenen Drehzahlbereiches der Welle (2) periodisch abwechselnd als Drehzahldetektor oder auf die Welle einwirkend, als Phasenstellglied geschaltet ist.

2. Anordnung nach Anspruch 1, dadurch gekennzeichnet, daß der Tachogenerator (9) als Phasenstellglied direkt von dem Referenzsignal gesteuert ist.

3. Anordnung nach Anspruch 1 oder 2, dadurch gekennzeichnet, daß der Drehzahlbereich, innerhalb dessen Grenzen die periodische Umschaltung von Tachogenerator (9) erfolgt, von der Drehzahlvergleichsschaltung (4) gesteuert ist.

4. Anordnung nach einem der Ansprüche 1 bis 3, dadurch gekennzeichnet, daß bei Übereinstimmung von Referenzsignal mit dem abgegebenen Signal von Tachogenerator (9) von der Drehzahlvergleichsschaltung (4) ein Taktgenerator (7) aktiviert wird, der einen elektronischen Schalter (5) für die periodische Umschaltung von Tachogenerator (9) steuert.